# EUROPÄISCHE PATENTANMELDUNG

(11) **EP 1 143 217 A2**
(43) Veröffentlichungstag der Anmeldung: **10.10.2001**
(21) Anmeldenummer: 01108407.6
(22) Anmeldetag: 03.04.2001
(51) Int. Cl.: F28F 5/02, B32B 31/00

(54) **Beheizbare Rollen, insbesondere für Laminatoren und Durchlauferhitzer**

(30) Priorität: 06.04.2000 DE 10017264
(71) Anmelder: Lewandowski, Axel, 78244 Gottmadingen (DE)
(72) Erfinder: Lewandowski, Axel, 78244 Gottmadingen (DE)

(57) **Zusammenfassung**

Eine beheizbare Rolle (1), insbesondere für Laminatoren und Durchlauferhitzer, verfügt über einen wärmeleitenden Außenmantel (8) und über innen angeordnete Heizelemente (6). Dabei besteht die Rolle (1) aus mindestens zwei zusammensetzbaren (3) Segmenten (2) mit jeweils einer einen Teil des Außenmantels (8) bildenden Außenoberfläche und mit jeweils die Innenoberfläche bildenden ebenen Flächen (10), wobei jeweils ein Dickschichtheizelement (6) auf jeder Innenoberfläche (10) angeordnet ist. Diese Rolle (1) ist mit einer Gummischicht zu einem Einsatz als heizbare Rolle für einen Laminator versehbar und sie kann direkt in eine Röhre eingesetzt in einem Durchlauferhitzer eingesetzt werden.

## Beschreibung

Die Erfindung betrifft eine beheizbare Rolle, insbesondere für Laminatoren und Durchlauferhitzer, sowie einen Laminator mit zwei beheizbaren Rollen und einen Durchlauferhitzer mit mindestens einer beheizbaren Rolle.

Beheizbare Rollen für Laminatoren sind aus dem Stand der Technik bekannt. Diese werden eingesetzt, um das Laminat zu erhitzen. Das Laminat besteht aus einer unteren und oberen Folienschicht und einem dazwischengelegten zu laminierendem Medium. Beim Heißlaminieren ist die PE-Folie mit dem Kunststoff EVA beschichtet. Die Folie wird auf das Medium aufgelegt und erwärmt. Das EVA schmilzt beim Erwärmen bei ca. 80° C und verbindet das Medium mit der PE-Folie, die erst bei ca. 120° C schmilzt. Die beiden Komponenten werden anschließend zusammengepreßt.

Der herkömmliche Laminierprozeß besteht aus mehreren Schritten. Zuerst wird das Laminat, bestehend aus Folie und Medium, durch ein erstes Rollenpaar in die Laminiervorrichtung eingezogen. Danach wird die EVA-Schicht durch Erwärmen verflüssigt. Die Folien werden nun mit dem Medium verklebt. Anschließend wird das Laminat von einem weiteren, zweiten Rollenpaar gepreßt und aus der Maschine ausgeschoben.

Aus dem Stand der Technik sind verschiedene Vorgehensweisen für das Erhitzen des zu laminierenden Materials bekannt. Dies ist einerseits das Anordnen von Heizelementen um die ersten Rollen herum. Dies erfordert jedoch eine anfängliche Wärmeübertragung und damit ein Aufheizen von ca. 10 Minuten. Um diese hohe Zeitspanne abzukürzen, wurden flache Heizelemente zwischen den ersten und den zweiten Rollen angeordnet. Dies senkt zwar die Aufheizzeit in erheblichem Maße auf Zeiten von 1 Minute, dabei wird jedoch das zu laminierende Material nicht zusammengedrückt, so daß die Verteilung des verklebenden Kunststoffmaterials auf dem zu laminierenden Medium nicht optimal ist. Ferner ist von Nachteil, daß die Laminiervorrichtung eine gewisse Größe erfordert, um den Platz für die flachen Heizelemente zwischen den beiden Rollenpaaren bereitzustellen.

Ausgehend von diesem Stand der Technik liegt der Erfindung somit die Aufgabe zugrunde, eine beheizbare Rolle anzugeben, mit der die Aufheizzeit für Laminatoren bei besserer Qualität des Laminierergebnisses reduziert und somit der Kundennutzen entscheidend verbessert werden kann.

Diese Aufgabe wird dadurch gelöst, daß die Rollen für Laminatoren innen hohl sind und an ihrem Innenmantel mit Dickschichtheizelementen oder Keramikheizelementen versehen sind.

Gemäß einer bevorzugten Ausgestaltung der Erfindung besteht die Rolle aus mindestens zwei, vorzugsweise drei, zusammensetzbaren Segmenten mit jeweils einer einen Teil eines Zylindermantels bildenden Außenoberfläche und mit jeweils die Innenoberfläche bildenden ebenen Flächen, wobei jeweils ein Dickschichtheizelement oder Keramikheizelement auf jeder Innenoberfläche angeordnet ist.

Somit wird erfindungsgemäß eine innen beheizbare Rolle insbesondere für Laminatoren angegeben, die auf der Dickschichttechnologie basiert. Das Problem der Dickschichttechnologie, daß nur ebene Heizelemente hergestellt werden können, führte dazu, daß die Dickschichttechnologie nur für die Beheizung auf ebenen Flächen von außen ihren Einsatz fand. Die Heizelemente werden nun auf speziell gestaltete Heizelementeträger aufgebracht, die sowohl eine ebene Fläche für die Heizelemente als auch eine optimale Wärmeverteilung zur Innenseite der Röhre gewährleisten.

Eine weitere Aufgabe liegt darin, eine beheizbare Rolle mit einer kurzen Aufheizzeit anzugeben, die in einer Vielzahl von Anwendungen einsetzbar ist.

Die beheizbare Rolle, die aus zusammensetzbaren Segmenten mit den genannten ebenen Flächen besteht, auf denen jeweils ein Dickschichtheizelement angeordnet ist, ist in einer Vielzahl von Anwendungen einsetzbar, zum Beispiel als Heizelement in einem Durchlauferhitzer. Somit kann mit einem Fertigungsweg ein Element hergestellt werden, das vielseitig einsetzbar ist.

Weitere vorteilhafte Ausführungsformen sind in den Unteransprüchen gekennzeichnet.

Die erfindungsgemäße Heizung wird nun anhand von bevorzugten Ausführungsbeispiele mit Hilfe der beigefügten Zeichnungen näher erläutert. Es zeigen:
- Figur 1: einen Querschnitt durch einen Heizstab einer Laminatorrolle aus drei Heizelementesegmenten,
- Figur 2: einen Querschnitt durch ein Heizelementsegment nach Figur 1,
- Figur 3: einen Querschnitt durch einen Heizstab nach Figur 1 als beheizte Rolle,
- Figur 4: einen Querschnitt durch einen Heizstab als beheizte Achse,
- Figur 5: einen Querschnitt durch eine alternative Ausführung des Heizstabes nach Figur 4,
- Figur 6: einen Querschnitt durch einen Heizstab mit fünf Heizelementsegmenten, und
- Figur 7: eine perspektivische Ansicht eines Durchlauferhitzer mit Heizstäben nach Figur 1.

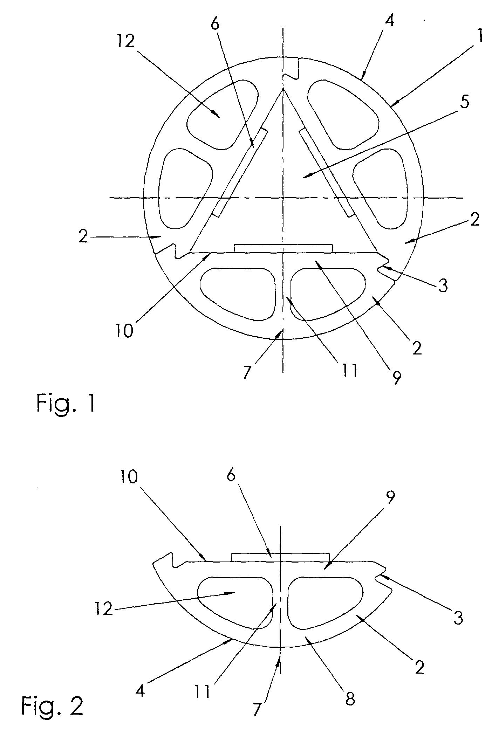

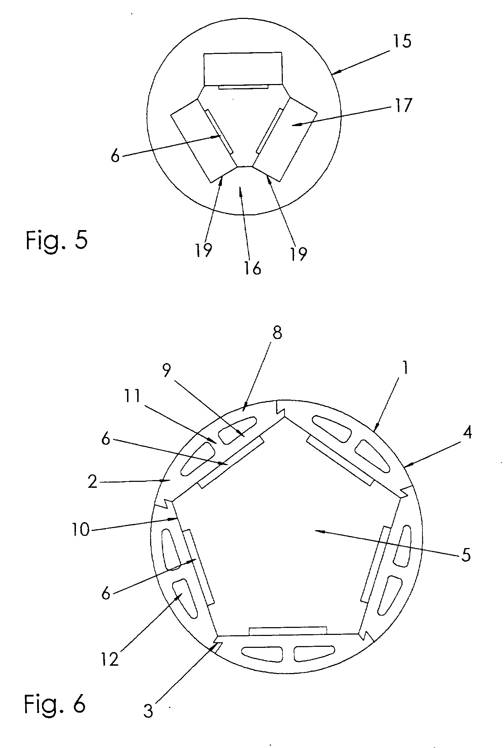

Die Figur 1 zeigt einen Querschnitt durch einen Heizstab einer Laminatorrolle 1, der aus drei Heizelementesegmenten 2 aufgebaut ist. Anstelle von drei Elementen könnten auch vier, fünf oder mehr Elemente vorgesehen sein, wobei eine geringere Anzahl den Vorteil der einfacheren Konstruktion aufweist und mehr Elemente den Vorteil der geringeren Abweichung der Form des heizenden Elementes von der äußeren Form der Rolle aufweist. Eine Ausführungsform mit nur zwei dann halbkreisförmigen Heizelementesegmenten 2 ist im Zusammenhang mit der Figur 5 beschrieben.

Die Heizelementesegmente 2 sind mit jeweils einem benachbarten Heizelementesegment 2 über eine schwalbenschwanzähnliche Führung 3 verbunden, wobei sich die drei Heizelementesegmente 2 zu je 120 Grad zu einem vollständigen Kreis einer Rolle 1 mit einer glatten zylindrischen Oberfläche 4 zusammensetzen. Im Innern der Rolle 1 verbleibt ein im Querschnitt dreieckiger Hohlraum 5. Mit dem Bezugszeichen 6 sind die in schematischer Weise dargestellten Dickschichtheizelemente oder Keramikheizelemente versehen.

Die Figur 2 zeigt einen Querschnitt durch ein einzelnes Heizelementsegment 2 nach Figur 1. Gleiche Merkmale sind mit gleichen Bezugszeichen gekennzeichnet. Das Heizelementsegment 2 ist symmetrisch bezüglich der Achse 7, die zugleich eine radiale Achse der aus den Heizelementsegmenten 2 aufgebauten Rolle 1 ist. Die seitlichen Schwalbenschwänze 3 gestatten das Zusammenschieben der Segmente 2 zur Rolle 1 entlang der Längsachse der Segmente 2.

Jedes Segment 2 besteht aus einer Mantelfläche 8 und aus einer Sektionsfläche 9, die im wesentlichen von einem der Schwalbenschwänze 3 zum gegenüberliegenden Schwalbenschwanz 3 führt. Diese Sektionsfläche 9 bildet auf der der Mantelfläche 8 abgewandten Seite eine ebene Fläche 10, auf der die Dickschichtheizfläche 6 aufgebracht ist. Zur Verbesserung der Wärmeleitung ist eine radiale Verbindung 11 zwischen der Sektionsfläche 9 und der Mantelfläche 8 vorgesehen. Dadurch sind zwei Hohlräume 12 entstanden. Bei anderen Ausgestaltungen kann die Sektionsfläche 9 auch radial weiter entfernt vom Zentrum der Rolle 1 angeordnet sein und auf die Verbindung 11 verzichtet werden. Weiterhin kann das Segment 2 auch ein Vollmaterial sein, so daß keine Hohlräume 12 bestehen. Bei einem Durchmesser von 2 Zentimeter für die Rolle weist der Mantel 8 hier beispielhaft eine Dicke von ungefähr 2 Millimeter auf und besteht beispielsweise aus Aluminium.

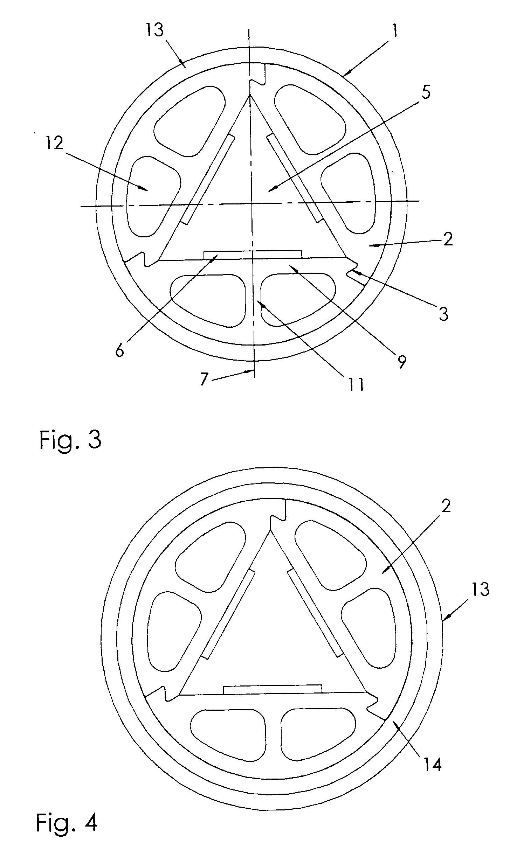

Die Figur 3 zeigt einen Querschnitt durch einen Heizstab nach Figur 1 als beheizte Rolle 1. In der Anwendung als Laminator läßt sich dieser Heizstab direkt als innen beheizbare Rolle 1 einsetzen. Hierzu wird der Heizstab mit einer gummiartigen Schicht 13 überzogen. Die Stromversorgung für die aufheizenden Schichten 6 wird über seitliche Schleifkontakte hergestellt, die jeweils seitlich um die Achse aus der Rolle 1 herausführen und von ortsfesten Schleifern abgegriffen werden. Unter ortsfest ist dabei die feste Relation zur Rolle 1 zu verstehen, da bei zwei Rollen 1 nur die eine Rolle 1 in dem Laminator ortsfest angeordnet ist, wohingegen die gegenüberliegende Rolle 1 in vertikaler Richtung beweglich ist und entweder durch die Schwerkraft nach unten gegen die andere Rolle 1 gedrückt wird oder durch eine Federkraft gegen die andere Rolle 1 vorgespannt ist. Dadurch kann das zu laminierende Medium unter Druck zwischen den Rollen 1 durchgeführt werden. Dies ist ein erheblicher Vorteil gegenüber dem Vorbeiführen an aufgeheizten Platten zwischen Eingangs- und Ausgangsrollen, da der Druck den dem Ort übertragen wird, an dem die Aufheizung stattfindet.

Die Figur 4 zeigt einen Querschnitt durch einen Heizstab als innen beheizbare Achse. Der Heizstab dient in dieser Ausführung sowohl als Heizung als auch als Achse. Der Vorteil liegt trotz der aufwendigeren Gestaltung der Rolle 1 in den einfacheren elektrischen Kontakten. Mit dem Bezugszeichen 14 ist die einstückige Röhre bezeichnet, bei der es sich beispielsweise um eine Stahlröhre oder eine Aluminiumröhre handeln kann.

Die Figur 5 zeigt einen Querschnitt durch eine alternative Ausführung 15 des Heizstabes nach Figur 4. Die Heizelemente, bestehend aus einem Träger 17 und der Dickschicht 6, werden hierbei direkt in eine Röhre 16 eingebracht. Die Heizelemente können dabei sowohl mit als auch ohne Trägerelement 17 ausgestattet sein. Für die Heizelemente 6 oder die Heizelementeträger 17 sind rechteckige Aufnahmen 19 in der Röhre 16 vorgesehen. Um eine möglichst optimale Wärmeübertragung von den Heizelementen 6 oder den Heizelementeträgern 17 zur Röhre 16 zu ermöglichen, ist es notwendig, die Abstände der Kontaktflächen zu minimieren. Dies steht jedoch im Gegensatz zur Montagefähigkeit speziell bei großer Länge der Aufnahmen. Dies kann zum einen durch Verkleben der Heizelemente 6 oder Heizelementeträger 17 mit dem Rohr 16 gelöst werden oder durch eine Materialkombination, die auf Grund der unterschiedlichen Wärmeausdehnungskoeffizienten im Fall der Erwärmung ein temporäres Verpressen der beiden Teile 16 und 17 gegeneinander in der Aufnahme 19 ermöglicht.

Durch das Vorsehen von Ausnehmungen 19 ist es möglich, auch nur zwei dann gegenüberliegende Heizelemente 6 einzusetzen. Genauso ist es möglich, eine Rolle nach Figur 1 nur mit zwei Teilen aufzubauen, wenn durch eine konvex-konkave Ausgestaltung der beiden Segmente in der Mitte ein Hohlraum verbleibt, in dem die Heizelemente 6 einsetzbar sind.

Die Figur 6 zeigt einen Querschnitt durch einen Heizstab mit fünf Heizelementsegmenten 2. Gleiche Merkmale sind mit gleichen Bezugszeichen gekennzeichnet und es ist klar zu erkennen, daß die Rolle 1 nach Figur 6 zur Rolle nach Figur 1 im wesentlichen gleich aufgebaut ist. Jedes Segment nimmt nun lediglich 72 Grad ein, der innere Hohlraum 5 ist relativ größer und die Heizschichten 6 sind näher an der Oberfläche 8 angeordnet und können im Verhältnis zur Größe der Mantelfläche 4 eine größere relative Oberfläche einnehmen.

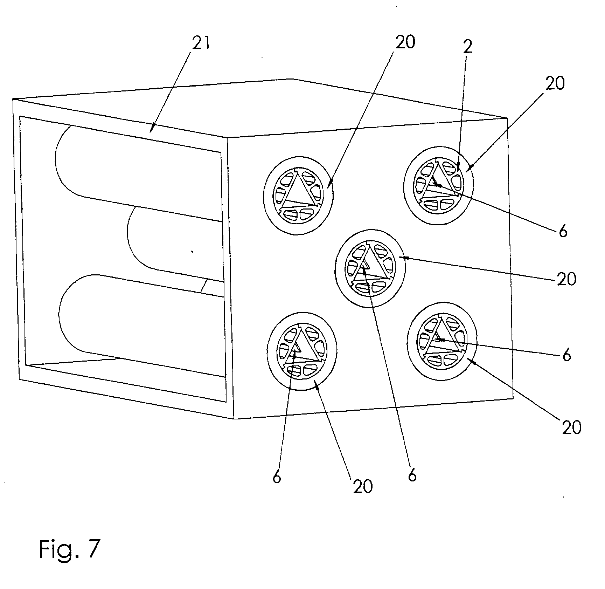

Die Figur 7 schließlich zeigt eine perspektivische Ansicht eines Durchlauferhitzer mit Heizstäben nach Figur 1. Der Aufbau dieser Anwendung aus Querstromwärmetauschern ist bekannt. Der Durchlauferhitzer besteht aus einem Rohr 21, in diesem Fall mit rechteckigem Querschnitt, und quer zur Durchströmrichtung eingebrachten kleineren runden Röhren 20. Im Gegensatz zu Wärmetauschern werden die quer zur Strömungsrichtung stehenden Röhren 20 nicht durch ein Fluid durchströmt, sondern es werden die elektrisch betriebenen Heizstäbe eingebracht, die aus den Segmenten 2 mit den innenliegenden Heizschichten 6 bestehen. Durch die Ausgestaltung der Heizstäbe mit Segmenten nach Figur 2 sind diese hocheffizienten Heizstäbe kostengünstig und konstruktiv einfach herstellbar. Neben den beiden genannten Anwendungsfeldern ist für den Fachmann, ohne den Rahmen der vorliegenden Erfindung zu verlassen, eine Reihe von Einsatzmöglichkeiten erkennbar, für den eine qualitativ gute Wärmekopplung bei elektrischer Erwärmung erforderlich ist.

## Patentansprüche

1. Beheizbare Rolle (1), insbesondere für Laminatoren und Durchlauferhitzer, mit einem wärmeleitenden Außenmantel (8) und innen angeordneten Heizelementen (6), **dadurch gekennzeichnet, daß** die Rolle (1) aus mindestens zwei zusammensetzbaren (3) Segmenten (2) mit jeweils einer einen Teil des Außenmantels (8) bildenden Außenoberfläche und mit jeweils die Innenoberfläche bildenden ebenen Flächen (10), wobei jeweils ein Dickschichtheizelement oder Keramikheizelement (6) auf jeder Innenoberfläche (10) angeordnet ist.

2. Rolle (1) nach Anspruch 1, **dadurch gekennzeichnet, daß** die Segmente (2) an ihren Umfangsenden über schwalbenschwanzähnliche Verbindungselemente (3) verfügen, mit denen jeweils zwei benachbarte Segmente (2) in einem Formschluß verbindbar sind.

3. Rolle (1) nach Anspruch 1 oder Anspruch 2, **dadurch gekennzeichnet, daß** jedes Segment (2) über einen zylindermantelförmige Außenmantel (8) und eine senkrecht zur radialen verlaufende Kreissektionselement (9) verfügt, welches an den Enden in den Außenmantel (8) übergeht.

4. Rolle (1) nach Anspruch 3, **dadurch gekennzeichnet, daß** eine radial verlaufende Wärmeleitungsverbindung (11) das Kreissektionselement (9) mit dem Außenmantel (8) verbindet.

5. Beheizbare Rolle (1), insbesondere für Laminatoren, mit einem wärmeleitenden Außenmantel (8) und innen angeordneten Heizelementen (6), **dadurch gekennzeichnet, daß** die Rolle (1) einstückig mit mindestens zwei die Innenoberfläche bildenden ebenen Flächen (10) ausgestaltet ist, die im Querschnitt bei zwei Flächen (10) gegenüberliegen bzw. bei drei oder mehr Flächen (10) ein regelmäßiges Vieleck bilden, auf die jeweils Dickschichtheizelemente oder Keramikheizelemente (6) aufgebracht sind

6. Rolle (1) nach Anspruch 5, **dadurch gekennzeichnet, daß** die ebenen Flächen (10) als innere Ausnehmungen (19) ausgestaltet sind, in die entweder die Dickschichtheizelemente oder Keramikheizelemente (6) direkt oder Heizelementträger (17) einsetzbar sind, auf denen die Dickschichtheizelemente (6) angeordnet sind.

7. Laminator mit zwei einander gegenüberliegenden beheizbaren Rollen (1) nach einem der Ansprüche 1 bis 6.

8. Durchlauferhitzer mit einem mit dem aufzuheizenden Fluid durchströmten Rohr (21) und mit quer zur Durchströmrichtung des Fluids eingebrachten kleineren runden Röhren (20), in denen Rollen (1) nach einem der Ansprüche 1 bis 6 angeordnet sind.
